# DEMANDE DE BREVET EUROPEEN

(11) **EP 1 254 817 A1**
(43) Date de publication de la demande: **06.11.2002**
(21) Numéro de dépôt: 02291112.7
(22) Date de dépôt: 03.05.2002
(51) Int. Cl.: B60T 7/10, B60T 13/74, G05G 1/02

(54) **Dispositif de commande électrique, notamment pour frein de stationnement dans un véhicule automobile**

(30) Priorité: 04.05.2001 FR 0105957
(71) Demandeur: Renault s.a.s., 92100 Boulogne Billancourt (FR)
(72) Inventeur: Petit, Gérard, 78290 Croissy sur Seine (FR); Quertinmont, Jean-Luc, 78460 Chevreuse (FR)

(57) **Abrégé**

Le dispositif de commande électrique (10) pour frein de stationnement dans un véhicule automobile comprend une manette d'actionnement (14) mobile dans un support-guide stationnaire (12), en va-et-vient dans une direction sous l'action d'un ressort (16) et dans une direction opposée sous une action manuelle, et des moyens de détection (50) de course délivrant un signal vers une unité de traitement et de commande, et des moyens de blocage/déblocage (18, 20) à actionnement manuel, pour bloquer la manette (14) par rapport au support-guide stationnaire (12) et la débloquer vis-à-vis de celui-ci.

Les moyens de blocage/déblocage (18, 20) sont composés d'un dispositif de blocage (18) et d'un dispositif de déblocage (20), le dispositif de blocage (18) comprend un cliquet pivotant (54) et une denture en crémaillère (52) appartenant l'un à la manette (14) et l'autre au support-guide (12), et le cliquet (54) comporte un crochet (56) qui coopère avec la denture (52).

## Description

L'invention concerne un dispositif de commande électrique, notamment pour un frein de stationnement d'un véhicule automobile, qui comprend une manette d'actionnement montée mobile dans un support-guide stationnaire, en va-et-vient dans une première direction sous l'action d'un ressort de rappel et dans une direction opposée sous une action manuelle, et des moyens de détection de la course de la manette fournissant un signal correspondant à une unité de traitement et de commande, et des moyens de blocage/déblocage à actionnement manuel, pour bloquer la manette mobile par rapport au support-guide stationnaire et la débloquer vis-à-vis de celui-ci.

Les solutions techniques existantes concernant les commandes pour frein de stationnement électriques font pour la plupart appel à des moteurs électriques et à des capteurs d'effort qui transforment l'effort exercé sur la commande de frein en un signal électrique transmis au système de freinage.

La gestion de la progressivité du freinage est souvent coûteuse car elle nécessite une unité électronique complexe. La restitution des sensations de freinage, comme l'intensité, la progressivité, et le blocage, est uniquement partielle et les scénarios proposés n'utilisent pas toutes les possibilités qu'offre la transmission électrique des données de freinage, tout en conservant des sensations "tactiles" de freinage.

L'objectif de la présente invention est ainsi de proposer un dispositif de commande électrique, notamment pour un frein de stationnement d'un véhicule automobile, qui permette d'une part de restituer à l'utilisateur les mêmes fonctionnalités et les mêmes sensations qu'un frein de stationnement classique, et qui propose d'autre part un scénario de manipulation sécurisant dans différents modes d'utilisation, c'est-à-dire à la fois un mode d'utilisation normale, et un mode d'utilisation de secours en remplacement du système de freinage normal, tout en procurant une sécurité vis-à-vis d'un déblocage intempestif du frein de stationnement.

Conformément à l'invention, cet objectif est atteint dans un dispositif de commande du type énoncé en introduction, en prévoyant que les moyens de blocage/déblocage comprennent un dispositif de blocage et un dispositif de déblocage, et que le dispositif de blocage comprenne un cliquet pivotant et une denture en crémaillère appartenant l'un à la manette et l'autre au support-guide, et que le cliquet comporte un crochet destiné à coopérer avec cette denture en crémaillère.

Ainsi, l'application du frein de stationnement pourra être commandée de manière simple, par traction manuelle sur la manette d'actionnement, le blocage de la manette se produisant automatiquement dès que le crochet du cliquet pivotant du dispositif de blocage vient engager la denture en crémaillère.

De même, le déblocage du frein de stationnement pourra avoir lieu de manière aussi simple, par dégagement du crochet du cliquet pivotant hors de la denture en crémaillère. Selon d'autres caractéristiques :
- la manette comprend un barreau allongé définissant un axe X-X du dispositif et une poignée solidaires l'un de l'autre, le barreau étant reçu en coulissement axial en va-et-vient dans un manchon de guidage du support-guide, et le barreau comporte une tête dans laquelle le cliquet est monté pivotant.
- la tête a sensiblement la forme d'une chape en U, comportant deux joues s'étendant axialement de part et d'autre de l'axe X-X, le cliquet est monté pivotant entre les joues autour d'un pivot perpendiculaire aux joues et définissant un axe de pivotement Y-Y écarté de l'axe X-X, et le cliquet comporte un crochet du côté opposé au pivot et orienté vers la denture en crémaillère.
- le support-guide comprend une règle allongée parallèle à l'axe X-X défini par le barreau, et la denture en crémaillère est définie sur un côté longitudinal de la règle tourné vers le barreau.
- le cliquet est repoussé en pivotement par un ressort monté dans la tête du barreau dans une direction dans laquelle le crochet du cliquet est engagé positivement dans la denture en crémaillère.
- le dispositif de déblocage comprend une tige reçue en coulissement dans un alésage axial du barreau, la tige se terminant à une extrémité contre le cliquet et à l'autre extrémité par un bouton-poussoir reçu dans la poignée de la manette, de sorte qu'une poussée sur le bouton-poussoir provoque un pivotement du cliquet à l'encontre du ressort dans une direction dans laquelle le crochet du cliquet est dégagé hors de la denture en crémaillère.
- la tête du barreau comporte un pion, et les moyens de détection de la course de la manette comprennent un potentiomètre linéaire fixé au support-guide et dont le curseur est attaqué par le pion.
- le support-guide comprend une plaque de support et un manchon de guidage solidaire de cette plaque de support, définissant une surface d'appui pour le ressort de rappel de la manette, la tête du barreau comporte une surface d'appui opposé pour le ressort, et le ressort est un ressort hélicoïdal disposé autour du barreau de la manette et emprisonné entre les surfaces d'appui du support et de la tête du barreau.
- le support-guide porte un arrêt pour le barreau de la manette.
- l'arrêt est un contacteur électrique.
- la poignée de la manette et le support-guide comportent des moyens anti-rotation pour la manette.

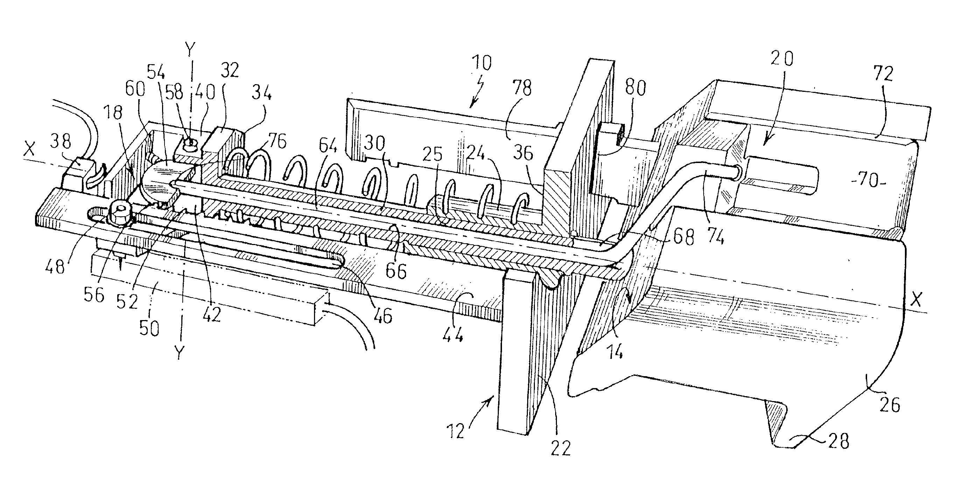

D'autres caractéristiques et avantages de l'invention apparaîtront à la lecture de la description détaillée qui suit, pour la compréhension de laquelle on se reportera à la figure unique annexée, et qui est une vue en perspective, avec arrachements partiels, d'une commande électrique de frein de stationnement selon la présente invention.

Dans cette figure, la commande de frein de stationnement, désignée dans son ensemble par la référence 10, comprend un support-guide 12, destiné à être monté fixe sur une partie de la structure d'un véhicule, non représentée, une manette 14 portée par le support 12 en translation suivant un axe X-X, un ressort de rappel 16 interposé entre le support 12 et la manette 14, un dispositif de blocage 18 disposé entre la manette 14 et le support 12, et un dispositif de déblocage 20 porté par la manette 14 et coopérant avec le dispositif de blocage 18.

Tous ces éléments vont maintenant être décrits plus en détail.

Le support-guide 12 comprend essentiellement une plaque 22, généralement perpendiculaire à l'axe X-X, destinée à être fixée sur la structure du véhicule par des moyens de fixation non représentés, et un manchon de guidage cylindrique 24, solidaire de la plaque 22 et perpendiculaire à celle-ci, dont l'axe définit l'axe X-X de l'ensemble de la commande 10, et dont l'alésage central 25 définit un guidage pour la manette 14.

La manette 14 comprend une poignée 26, située d'un côté de la plaque de support 22 afin de se trouver à portée d'un conducteur de véhicule (non représenté) et conformée de manière à présenter sur sa face inférieure un bec 28 que le conducteur peut agripper en repliant légèrement le bout des doigts vers le haut à la manière d'un crochet, comme bien connu. La manette comprend encore un barreau 30 cylindrique, solidaire de la poignée 26, qui traverse l'alésage de guidage 25 du support 12 et qui se termine à distance de celui-ci par une tête 32 élargie.

Sur son côté tourné vers le support 12, la tête 32 présente une surface d'appui 34. Le ressort de rappel 16, de préférence du type hélicoïdal, entoure le barreau 30 et il est interposé entre cette surface d'appui 34 et une surface d'appui opposée 36, définie sensiblement sur la face postérieure de la plaque de support 22 autour du manchon 14. Ainsi, le ressort 16 repousse le barreau 30 et donc la poignée 26 en permanence vers la gauche sur la figure, jusque dans une position de repos dans laquelle la tête 32 du barreau 30 vient buter contre un arrêt 38, qui constitue ici simultanément un contacteur électrique de signalisation.

La tête 32 forme, à l'opposé du barreau 30, une chape en U, dont les joues 40 et 42 s'étendent axialement de part et d'autre de l'axe X-X en définissant entre les joues un intervalle qui abrite le dispositif de blocage 18, décrit en détails plus loin.

Pour compléter le support et le guidage du barreau 30 de la manette 14, la plaque de support 22 porte encore une règle 44 allongée, fixée à une extrémité sur la plaque 22, qui s'étend le long du barreau 30 et dans laquelle est définie une lumière oblongue 46, parallèle à l'axe X-X, dans laquelle est guidé un pion 48 porté par une joue 42 de la tête 32.

De cette manière, le pion 48, perpendiculaire à la joue 42, et donc à l'axe X-X, assure, en coulissant dans la lumière oblongue 46 de la règle 44, un guidage et un soutien de la tête 32 lors de son déplacement le long de l'axe X-X.

Comme représenté schématiquement en silhouette sur la figure, un potentiomètre 50 linéaire est fixé sur la règle 44 parallèlement à l'axe X-X, de manière que le pion 48 attaque le curseur du potentiomètre 50. Comme cela est par ailleurs connu dans le domaine des commandes de frein de stationnement électriques, les bornes du potentiomètre 56 sont raccordées à une unité de traitement et de commande électronique (non représentée) dont le rôle est d'exploiter les informations provenant du potentiomètre, et de commander le frein de stationnement avec une force proportionnelle à la course du potentiomètre 50, et donc à la course de la poignée 26.

Sur son côté longitudinal tourné vers le barreau 30, la règle 44 porte une denture 52 en crémaillère, et le dispositif de blocage 18 comprend un cliquet 54 pivotant, porté par la tête 32, qui se termine par un crochet 56 destiné à venir s'engager dans la denture 52. Le cliquet 54 est monté en pivotement sur la tête 32 autour d'un pivot 58 qui traverse les deux joues 40 et 42 en définissant un axe Y-Y perpendiculaire à l'axe X-X, disposé à distance de celui-ci du côté opposé par rapport à la crémaillère 52. Un ressort de rappel 60 interposé entre la tête 32 et le cliquet 54 rappelle celui-ci en direction de la manette 14, dans une position dans laquelle le crochet 56 du cliquet 54 s'engage positivement dans la crémaillère 52 et empêche ainsi tout déplacement du barreau 30 et de la manette 14 vers la gauche sur la figure sous l'action du ressort 16.

Le blocage du crochet 56 du cliquet 54 dans la crémaillère 52 peut être annulé par un dispositif de déblocage 62, principalement constitué par une tige 64, laquelle traverse axialement le barreau 30 sur toute sa longueur, celui-ci présentant un alésage 66 à cet effet et une fenêtre latérale 68 à son extrémité côté poignée 26, et par un bouton-poussoir 70 fixé à une extrémité de la tige 64 et logé en coulissement en va-et-vient dans un logement 72 ménagé dans la poignée 26 de la manette 14.

Le bouton-poussoir 70 est décalé par rapport à l'axe X-X du barreau 30 et de la poignée 26 et la tige 64 comporte en correspondance un double coude 74 à son extrémité côté poignée 26, grâce auquel elle sort de l'alésage 66 du barreau 30 via la fenêtre 68 et rejoint le bouton-poussoir 70 auquel elle est fermement reliée.

À son extrémité opposée, la tige 64 se termine contre le cliquet 54 et elle est reliée à celui-ci par une attache pivotante 76. Ceci permet de communiquer une poussée de la tige 64 de la droite vers la gauche suivant l'axe X-X au cliquet 54, de sorte que celui-ci va pivoter autour de son pivot 58 à l'encontre du ressort 60 jusqu'à ce que le crochet 56 se dégage de la denture 52. Inversement, l'attache pivotante 76 permet de communiquer en retour une poussée de la gauche vers la droite depuis le cliquet 54 vers la tige 64.

Enfin, le dispositif comprend des moyens anti-rotation, sous la forme d'une patte 78 qui dépasse de la poignée 26 selon la direction parallèle à l'axe X-X et à distance de celui-ci, et d'une lumière traversante 80 ménagée dans la plaque de support 12 et avec un contour complémentaire de la section de la patte 78. Grâce à ces moyens, la poignée 26 et le barreau 30 ne sont pas capables de tourner autour de l'axe X-X.

Avant de décrire le fonctionnement du dispositif, on définit comme position de repos la position illustrée sur la figure, dans laquelle le barreau 30 et la poignée 26 de la manette 14 sont repoussés vers la gauche par le ressort 16 jusqu'à ce que la tête 32 du barreau vienne en butée contre l'arrêt/contacteur 38. Le changement d'état correspondant du contacteur est exploité dans l'unité de traitement et de commande selon le programme exécuté dans celle-ci, pour déclencher par exemple l'allumage/extinction d'une lampe-témoin sur le tableau de bord.

Le pion 48 a amené le curseur du potentiomètre 50 dans une position de fin de course à gauche, et l'information aux bornes du potentiomètre est exploitée par l'unité de traitement et de commande qui fournit au frein de stationnement un ordre correspondant "absence de freinage".

Avantageusement, on intègre l'ensemble dans le tableau de bord du véhicule (non représenté) de telle façon que l'extrémité de la poignée 26 avec son bec 28 affleure à la surface d'un habillage du tableau de bord. Ainsi le conducteur peut vérifier visuellement et/ou par voie tactile que la poignée 26 est en affleurement et donc que le frein de stationnement n'est pas appliqué.

Le fonctionnement de la commande de frein de stationnement est le suivant.

Lorsqu'il désire appliquer le frein de stationnement, le conducteur saisit la poignée 26 par son bec 28 à l'aide des doigts repliés de la main, et tire sur la poignée 26 suivant l'axe X-X vers la droite sur la figure. La poignée 26 et le barreau 30 se déplacent vers la droite en comprimant progressivement le ressort 16 entre la tête 32 du barreau 30 et la plaque de support 22. Le déplacement de la tête 32 est converti, via le pion 48 et le potentiomètre 50, en une information électrique exploitée par l'unité de traitement et de commande qui en dérive un signal de freinage envoyé au frein de stationnement en provoquant une application de celui-ci, de façon généralement proportionnelle à la course de la poignée 26.

Grâce au ressort de rappel 16, le conducteur reçoit une information tactile représentative de l'effort de freinage appliqué au niveau du frein de stationnement.

Tout au long du déplacement du barreau 30 et de sa tête 32 vers la droite, le cliquet 54 est également entraîné vers la droite.

L'engagement du crochet 56 du cliquet 54 dans la denture de la crémaillère 52 empêche temporairement ce déplacement du cliquet 54 vers la droite, de sorte qu'il pivote légèrement vers la gauche autour du pivot 58 en comprimant le ressort 60, avec pour conséquence que le crochet 56 finit par échapper hors de la denture 52, ce qui libère le cliquet 54 qui tourne alors vers la droite sous l'action du ressort 60 et le crochet 56 saute à la dent suivante de la denture 52. Le processus se répète autant de fois que nécessaire, c'est-à-dire sur un nombre de dents correspondant sensiblement à la course imposée par le conducteur à la poignée 26.

Lors que le conducteur relâche la poignée 26, le crochet 56 du cliquet 54 reste bloqué dans la denture 52 de la crémaillère, l'ensemble barreau 30/poignée 26 demeure dans la position atteinte, empêchés qu'ils sont de revenir vers la position de repos, et le curseur du potentiomètre 50 reste dans la position atteinte ; l'unité de traitement et de commande poursuit l'application du frein de stationnement.

Du fait de son déplacement vers la droite, la poignée 26 dépasse alors depuis le tableau de bord et le conducteur peut vérifier par voie tactile et/ou visuelle que le frein de stationnement est appliqué.

Lorsqu'il désire ensuite relâcher le frein de stationnement, le conducteur doit libérer l'engagement du crochet 56 du cliquet 54 hors de la denture 52 de crémaillère, ce qu'il effectue en poussant sur le bouton-poussoir 70. Cependant, il lui faut préalablement tirer sur la poignée 26, avec une force qui surmonte celle du ressort de rappel 16. En effet, la force du ressort 16 qui pousse sur la tête 32 et sur le cliquet 54 vers la gauche provoque un blocage positif du crochet 56 dans la denture 52, tel que la force qu'il serait nécessaire d'appliquer sur le bouton 70 pour annuler ce blocage dépasse de très loin la force que le conducteur peut appliquer sur le bouton-poussoir.

Ainsi donc, lorsqu'il a légèrement tiré la poignée 26 vers lui, le conducteur appuie sur le bouton-poussoir 70 afin de faire tourner le cliquet 54, devenu pratiquement libre de pivoter autour de l'axe Y-Y, et le crochet 56 finit par se dégager de la denture 52. Le conducteur peut alors laisser progressivement la poignée 26 - et avec elle le barreau 30, la tête 32 et tous les éléments mobiles qu'elle porte - vers la gauche jusqu'à la position de repos, à condition bien entendu de garder enfoncé le bouton-poussoir 70 car sinon le crochet 56 viendrait s'engager de nouveau dans la denture 52 et empêcher la poursuite du mouvement de retour vers la position de repos.

La manipulation pour le conducteur est très simple et ergonomique étant donné qu'il peut saisir le bec 28 de la poignée avec les phalanges repliées de l'index à l'auriculaire, et simultanément appuyer sur le bouton-poussoir 70 avec le pouce.

Lorsqu'il ressent la fin du mouvement, par venue en butée de l'ensemble contre l'arrêt 38, il relâche la poignée 26 et le bouton-poussoir 70, et le dispositif est revenu dans sa position de repos.

Le dispositif permet encore un mode de fonctionnement en freinage de secours, comme cela peut devenir nécessaire en cas de défaillance de l'installation principale de freinage.

Pour procéder à ce freinage de secours, avec dosage de l'effort de freinage, le conducteur saisit la poignée 26 par son bec 28 et enfonce simultanément le bouton-poussoir 70, puis tire la poignée avec une force dosée à l'encontre du ressort 16.

L'effort de freinage effectif sera alors constamment proportionnel à l'action du conducteur. En maintenant le bouton-poussoir 70 enfoncé, le conducteur conserve à tout instant le contrôle de l'effort de freinage, autant dans le sens d'une diminution que dans le sens d'une augmentation, puisqu'il ne court pas le risque d'un blocage intempestif du cliquet de blocage 54.

Le dispositif apporte également une sécurité à l'encontre d'une manipulation accidentelle, comme dans le cas où un enfant pourrait déclencher la libération du frein de stationnement dans une situation dangereuse. En effet, l'obligation de procéder à une double action, c'est-à-dire de tirer sur la poignée 26 et de pousser simultanément sur le bouton-poussoir 16, exclut pratiquement une telle manipulation, d'autant plus que l'effort de traction à appliquer sur la poignée dépasse normalement la force d'un enfant.

L'ensemble des pièces nécessaires peuvent être fabriquées à des coûts raisonnables, d'autant plus que le guidage du barreau 30 en longueur dans le manchon 24 est relativement insensible aux tolérances. La fiabilité du dispositif est en particulier excellente grâce à la réalisation sensiblement symétrique par rapport à l'axe longitudinal X-X, ce qui le rend peu sujet aux coincements.

Une adaptation à divers modèles de véhicules est possible de façon très simple. Il suffit de réaliser, à partir d'un modèle de mécanisme unique, à chaque fois un groupe poignée 26/bouton-poussoir 70 dont les formes, les matières, et les couleurs sont adaptées à celle de l'habillage du tableau de bord du véhicule concerné. Le cas échéant, l'adaptation pourra consister à remplacer le ressort de rappel 16 par un autre.

## Revendications

1. Dispositif de commande électrique (10), notamment pour frein de stationnement dans un véhicule automobile, qui comprend une manette d'actionnement (14) mobile montée dans un support-guide stationnaire (12), en va-et-vient dans une première direction sous l'action d'un ressort de rappel (16) et dans une direction opposée sous une action manuelle, et des moyens de détection (50) de la course de la manette (14) délivrant un signal correspondant vers une unité de traitement et de commande, et des moyens de blocage/déblocage (18, 20) à actionnement manuel, pour bloquer la manette mobile (14) par rapport au support-guide stationnaire (12) et la débloquer vis-à-vis de celui-ci,
**caractérisé en ce que** les moyens de blocage/déblocage (18, 20) sont composés d'un dispositif de blocage (18) et d'un dispositif de déblocage (20), **en ce que** le dispositif de blocage (18) comprend un cliquet pivotant (54) et une denture en crémaillère (52) appartenant l'un à la manette (14) et l'autre au support-guide (12), et **en ce que** le cliquet (54) comporte un crochet (56) destiné à coopérer avec la denture (52).

2. Dispositif selon la revendication 1, **caractérisé en ce que** la manette (14) comprend un barreau allongé (30) définissant un axe X-X du dispositif (10) et une poignée (26) solidaires l'un de l'autre, le barreau (30) étant reçu en coulissement axial en va-et-vient dans un manchon de guidage (24) du support-guide (12), et **en ce que** le barreau (30) comporte une tête (32) dans laquelle est monté le cliquet pivotant (54).

3. Dispositif selon la revendication 2, **caractérisé en ce que** la tête (32) a sensiblement la forme d'une chape en U, comportant deux joues (40, 42) s'étendant axialement de part et d'autre de l'axe X-X, **en ce que** le cliquet (54) est monté pivotant entre les joues (40, 42) autour d'un pivot (58) perpendiculaire aux joues et définissant un axe de pivotement Y-Y écarté de l'axe X-X, et **en ce que** le cliquet (54) comporte un crochet (56) du côté opposé au pivot (58) et orienté vers la denture en crémaillère (52).

4. Dispositif selon l'une ou l'autre des revendications 2 et 3, **caractérisé en ce que** le support-guide (12) comprend une règle (44) allongée parallèle à l'axe X-X défini par le barreau (30), et **en ce que** la denture en crémaillère (52) est définie sur un côté longitudinal de la règle (44) tourné vers le barreau (30).

5. Dispositif selon la revendication 4, prise en dépendance de la revendication 3, **caractérisé en ce que** le cliquet (54) est repoussé en pivotement par un ressort (60) monté dans la tête (32) du barreau (30) dans une direction dans laquelle le crochet (56) du cliquet (54) est positivement engagé dans la denture en crémaillère (52).

6. Dispositif selon la revendication 5, **caractérisé en ce que** le dispositif de déblocage (20) comprend une tige (64) reçue en coulissement dans un alésage axial (66) du barreau (30), la tige se terminant à une extrémité contre le cliquet (54) et à l'autre extrémité par un bouton-poussoir (70) reçu dans la poignée (26) de la manette (14), de sorte qu'une poussée sur le bouton-poussoir (70) provoque un pivotement du cliquet (54) à l'encontre du ressort (70) dans une direction dans laquelle le crochet (56) du cliquet (54) est dégagé hors de la denture en crémaillère (52).

7. Dispositif selon l'une quelconque des revendications 2 à 6, **caractérisé en ce que** la tête (32) du barreau (30) comporte un pion (48), et **en ce que** les moyens de détection (50) de la course de la manette (14) comprennent un potentiomètre linéaire (50) fixé au support-guide (12, 44) et dont le curseur est attaqué par le pion (48).

8. Dispositif selon l'une quelconque des revendications 2 à 7, **caractérisé en ce que** le support-guide (12) comprend une plaque de support (22) et un manchon de guidage (24) solidaire de cette plaque de support, définissant une surface d'appui (36) pour le ressort de rappel (16) de la manette (14), **en ce que** la tête (32) du barreau (30) comporte une surface d'appui (34) opposé pour le ressort (16), et **en ce que** le ressort (16) est un ressort hélicoïdal disposé autour du barreau (30) de la manette (14) et emprisonné entre les surfaces d'appui (36, 34) du support (22) et de la tête (32) du barreau (30).

9. Dispositif selon l'une quelconque des revendications 2 à 8, **caractérisé en ce que** le support-guide (12, 22, 44) porte un arrêt (38) pour le barreau (30) de la manette (14).

10. Dispositif selon la revendication 9, **caractérisé en ce que** l'arrêt (38) est un contacteur électrique.

11. Dispositif selon l'une quelconque des revendications 2 à 10, **caractérisé en ce que** la poignée (26) de la manette (14) et le support-guide (12) comportent des moyens anti-rotation (78, 80) pour la manette (14).
